# EUROPÄISCHE PATENTSCHRIFT

(11) **EP 3 606 849 B1**
(45) Veröffentlichungstag und Bekanntmachung des Hinweises auf die Patenterteilung: **18.10.2023**
(21) Anmeldenummer: 18702985.5
(22) Anmeldetag: 01.02.2018
(51) Int. Cl.: B65G 43/08, B65G 15/08

(54) **TASCHENFÖRDERGURTANLAGE**
POCKET-TYPE CONVEYOR BELT INSTALLATION
SYSTÈME DE BANDE TRANSPORTEUSE À POCHE

(30) Priorität: 07.04.2017 DE 102017206002
(43) Veröffentlichungstag der Anmeldung: 12.02.2020
(73) Patentinhaber: ContiTech Transportbandsysteme GmbH, 30165 Hannover (DE)
(72) Erfinder: BEHRENS, Carsten, 37434 Bilshausen (DE); KLUTH, Olaf, 30419 Hannover (DE); SCHLOMSKI, Jens, 37115 Duderstadt (DE)
(74) Vertreter: Continental Corporation
(86) Internationale Anmeldenummer: PCT/EP2018/052463
(87) Internationale Veröffentlichungsnummer: WO 2018/184749

(56) Entgegenhaltungen:
- EP-A2- 0 718 218
- WO-A1-03/093149
- WO-A1-2013/149292
- WO-A1-2017/016666
- DE-A1- 3 303 469
- JP-A- 2000 025 920
- JP-A- 2014 227 229
- JP-B2- 3 413 575
- KR-B1- 100 752 124
- US-A- 3 602 041

## Beschreibung

Die vorliegende Erfindung betrifft eine Taschenfördergurtanlage gemäß des Oberbegriffs des Patentanspruchs 1.

Auf dem Gebiet der Fördertechnik ist ein Fördergurttyp namens SICON^{®} bekannt, welcher beispielsweise in der EP 0 286 637 B1 beschrieben wird. Ein SICON-Fördergurt weist in Längsrichtung, d.h. in Bewegungsrichtung des Fördergurts, zwei Stahlseile als Zugträger auf, welche jeweils in den beiden seitlichen Randbereichen in Längsrichtung einvulkanisiert sind. Die Randbereiche können auch als Fördergurtkanten bezeichnet werden, welche im Betrieb im geschlossenen Zustand des SICON-Fördergurts übereinander geführt werden. Die beiden Randbereiche weisen um die Stahlseile herum Profile auf, welche von entsprechenden Rollen einer Fördergurtanlage im Wesentlichen gemeinsam geführt werden können, so dass der Fördergurt nach unten hängend gehalten werden kann. Diese Rollen haben die Funktion, die Randbereiche zueinander zu führen und dabei aneinander zu drücken, weshalb sie auch als Laufrollen, Führungsrollen, Tragrollen oder Spannrollen bezeichnet werden können. Ggfs. können einzelne oder alle Rollen zusätzlich angetrieben werden, um den SICON-Fördergurt in der Förderrichtung zu bewegen.

Auf diese Weise kann ein SICON-Fördergurt zum geschlossenen Transport von losem Fördergut taschenartig zusammengeklappt werden, so dass die beiden Randbereiche übereinander liegend geführt werden können. Die dazwischenliegende Fläche des SICON-Fördergurts hängt dabei frei nach unten und trägt das Fördergut geschlossen in sich. Ein SICON-Fördergurt kann daher auch als Taschenfördergurt oder Taschenförderer bezeichnet werden. Durch entsprechende Führungen kann der SICON-Fördergurt an den Aufgabe- und Abgabestellen geöffnet und geschlossen werden.

Vorteilhaft ist bei SICON-Fördergurten, dass der SICON-Fördergurt bzw. die entsprechende SICON-Fördergurtanlage einen geringen Platzbedarf aufweist und somit in engen Situationen eingesetzt werden kann. Dies gilt auch für die Überwindung von Höhenunterschieden in engen Situationen. Dabei können üblicherweise Höhenunterschiede bei taschenförmig geschlossenem SICON-Fördergurt mit Steigungen bis zu ca. 35° überwunden werden, indem das Fördergut innerhalb der Tasche bzw. des Bags zusammengedrückt und hierdurch kraftschlüssig gehalten werden kann.

Im Betrieb einer SICON-Fördergurtanlage kann die Frage nach einer Erfassung des geförderten Massenstroms des SICON-Fördergurts auftreten. Diese Erfassung geschieht üblicherweise durch eine Abkopplung der Haltepunkte ganzer Traggestellsegmente der SICON-Fördergurtanlage aus der normalen Streckenführung, was somit erhebliche konstruktive Maßnahmen bei der Anlagenkonstruktion verlangen kann. Ebenfalls bedeutet dieses zumeist einen erheblichen "Todmassenanteil" innerhalb der Messkette, welcher die eigentliche Masse des zu messenden Fördergutstrom zum Teil deutlich übersteigen und daher sowohl die Qualität der Messung hinsichtlich Auflösung und Sensibilität negativ beeinflussen kann.

Die Kenntnis des Massenstroms des SICON-Fördergurts kann beispielsweise im Falle von nachgeschalteten Mischprozessen oder aber einer dem Förderstrom angepassten Betriebs-Umlaufgeschwindigkeit erforderlich sein. Im letzteren Fall kann eine Optimierung des Füllgrads der Tasche des SICON-Fördergurts dahingehend vorgenommen werden, dass ein geringerer geförderter Massenstrom bei konstanter Füllhöhe zu einer geringeren Geschwindigkeit des SICON-Fördergurts führen kann. Hierdurch kann die Leistungsaufnahme reduziert werden, wodurch gleichzeitig eine Reduktion der Biege-Wechselbeanspruchungen des Gurtsystems über die Zeit durch Kurven und Umlenktrommeln erreicht werden kann. Dies kann die Lebensdauer des SICON-Fördergurts verlängern.

Die JP 2000-025920 A betrifft die positive Erfassung der nach unten gerichteten Last und Erleichterung des Demontage-/Montagevorgangs durch Begrenzung der Rollenwelle einer Rolle, die ein Förderband trägt, mit einer Halterung, so dass sie sich nicht horizontal bewegt, und durch Abstützung der Rolle von der unteren Seite durch einen Lasterfassungskörper. Dieser Rohrförderer, der ein zu beförderndes Objekt aus körnigem Material wie Zement und Kies mit einem rohrförmig geformten Streifenförderband befördert, ist mit einer Vielzahl von Rollen versehen, die drehbar von einem Rahmenkörper getragen werden, der vertikal entlang einer Förderlinie in vorgeschriebenen Abständen montiert ist, so dass die Rollen das Förderband rohrförmig umlaufen können. Die jeweiligen Rollen werden von einer Rollenwelle über ein Lager getragen, und die Rollenwelle wird von einer Konsole über eine in der Nähe ihrer beiden Enden ausgebildete Kerbe gestützt, so dass sie sich axial nicht bewegen kann. In der Mitte der Halterung, die die unterste Rolle trägt, ist ein Kraftaufnehmer montiert, um die Belastung des unteren Teils auf der Grundlage der Leistung zu erfassen.

Die WO 2013/149292 A1, welche die Merkmale des Oberbegriffs des Anspruchs 1 offenbart, betrifft ein Fördersystem mit einer Bahn, die sich zwischen einem Ladebereich und einem Abgabebereich erstreckt, einem Endlosband, das zu einer röhrenförmigen Form biegbar ist, wobei das Endlosband verdickte Ränder aufweist, einer Anzahl von Schlitten, die beweglich an der Bahn angebracht sind, wobei die Schlitten Bandrollen zum Eingriff mit den Rändern des Bandes aufweisen, um dadurch das Band zu stützen, und einem Ladewagen, der es ermöglicht, Material auf das Band zu laden, wobei die Beladestation zumindest innerhalb des Beladebereichs beweglich ist, einen Austragsschlitten, um das Austragen von Material vom Band zu ermöglichen, wobei die Austragsstation zumindest innerhalb des Austragsbereichs beweglich ist, und eine Anzahl von Zwischenschlitten, die zwischen dem Belade- und dem Austragsschlitten angeordnet sind, um das Band entlang der Transport- und Rücklaufwege mit der Rohrform zu stützen.

Eine Aufgabe der vorliegenden Erfindung ist es, einen Taschenfördergurt bzw. eine Taschenfördergurtanlage der eingangs beschriebenen Art bereit zu stellen, so dass das Gewicht des aufgenommenen Förderguts im Betrieb einfacher als bisher bekannt erfasst werden kann. Zumindest soll eine alternative Taschenfördergurtanlage bereitgestellt werden.

Die Aufgabe wird erfindungsgemäß durch eine Taschenfördergurtanlage mit den Merkmalen gemäß Patentanspruch 1 gelöst. Vorteilhafte Weiterbildungen sind in den Unteransprüchen beschrieben.

Die vorliegende Erfindung betrifft somit eine Taschenfördergurtanlage mit einem Taschenfördergurt und mit einer Mehrzahl von Tragrollen, welche ausgebildet sind, eine untere Fördergurtkante eines Taschenfördergurts zu tragen, wobei die Tragrollen jeweils mittels wenigstens einer Tragrollenhalterung kraftaufnehmend mit einem Traggestell der Taschenfördergurtanlage verbunden sind.

Derartige Konstruktionen von Taschenfördergurtanlagen sind bekannt. Hierbei kann der Taschenfördergurt durch einzelne Tragrollen getragen werden, welche an einem Traggestell gemeinsam oder an mehreren Traggestellen einzeln oder zu mehreren direkt oder indirekt über Tragrollenhalterungen befestigt sein können. Selbiges Traggestell kann die Last bzw. die Kraft, welche aus dem Gewicht des Taschenfördergurtes und dem Gewicht des aufgenommenen Förderguts resultiert, durch rollenden Lastabtrag aufnehmen und diese z.B. nach oben in die Gerüstkonstruktion der Taschenfördergurtanlage entlang des Streckenverlaufs über mechanische Befestigungselemente wie z.B. Schrauben oder Klemmen weiter leiten.

Es weist wenigstens eine Tragrollenhalterung, vorzugsweise eine Mehrzahl von Tragrollenhalterungen, wenigstens ein Sensorelement auf, welches angeordnet und ausgebildet ist, wenigstens eine Kraft und bzw. oder eine Kraftänderung zwischen der Tragrolle und dem Traggestell zu erfassen. Auf diese Weise kann erstmalig an dieser Stelle eine Kraft als absoluter oder relativer Wert bzw. eine Veränderung dieses Wertes sensorisch erfasst werden. Hierdurch kann eine Taschenfördergurtanlage mit einer Wiegefunktion versehen werden. Diese Information kann vielfältig zum Betrieb der Taschenfördergurtanlage genutzt werden, wie im Folgenden näher beschrieben werden wird.

Hierbei kann es vorteilhaft sein, wenn eine Fördergurtkante des Taschenfördergurts wie insbesondere die untere Fördergurtkante des Taschenfördergurts von der Tragrolle getragen wird, dessen Last sensorisch erfasst werden kann, da ein Taschenfördergurt über die untere Fördergurtkante den größeren Teil seines Gesamtgewichts auf die entsprechende Tragrolle übertragen kann, so dass auf diese Art und Weise ein möglichst hoher Messwert erhalten werden kann. Dies kann die Genauigkeit der Messung verbessern. Auch kann das tatsächliche Gesamtgewicht an dieser Stelle möglichst genau erfasst werden.

Grundsätzlich reicht dabei lediglich ein mit entsprechender Sensortechnik versehener Tragarm aus, um die Wiegefunktion zu realisieren. Jedoch kann es vorteilhaft sein, eine Mehrzahl von Tragrollenhalterungen mit jeweils einem Sensorelement zu versehen, so dass die Kraft bzw. Kraftänderungen an mehreren Stellen der Taschenfördergurtanlage erfasst werden kann. Hierdurch kann z.B. die Meßgenauigkeit, d.h. die Qualität der Messdaten, durch Akkumulation oder statistische Algorithmen erhöht werden. Beispielsweise können mehrere erfasste Messwerte bzw. alle erfassten Messwerte gemittelt werden, um einen einzigen repräsentativen Gesamtmesswert zu erhalten, dessen Qualität und damit Aussagekräftigkeit umso höher sein kann, desto mehr Messwerte verwendet werden.

Vorteilhaft kann es dabei sein, mehrere Sensoren in Reihe zu schalten, da so etwaige Ausrichtungsfehler der einzelnen Tragarme über den Streckenverlauf der Taschenfördergurtanlage dadurch ausgeglichen werden können, dass eine Mittelung der Werte von Signalen einander nachfolgender Tragarme erfolgen kann. Dies kann die Qualität der Messung verbessern.

Das Sensorelement ist dabei vorzugsweise an der Stelle zu positionieren, wo die größte Krafteinleitung in die Tragrollenhalterung bzw. durch die Tragrollenhalterung hindurch zu erwarten ist. Hierdurch kann die Höhe des Messwertes gesteigert werden, was die Qualität der Messung verbessern kann.

Gemäß einem Aspekt der vorliegenden Erfindung weist das Sensorelement wenigstens einen Dehnungsmesstreifen auf oder ist als Dehnungsmesstreifen ausgebildet. Hierdurch kann eine einfache, kostengünstige und bzw. oder direkte Erfassung der Kraft bzw. der Kraftänderung an der Stelle der Tragrollenhalterung erfolgen. Insbesondere kann ein Dehnungsmessstreifen (DMS) z.B. durch Aufkleben auf der Oberfläche einfach und schnell aufgebracht und z.B. bei Beschädigung auch entfernt und ersetzt werden. Dabei können auch mehrere Dehnungsmessstreifen gemeinsam eingesetzt und einzeln oder miteinander kombiniert in Reihe und bzw. oder parallel zueinander erfasst werden.

Gemäß einem weiteren Aspekt der vorliegenden Erfindung weist das Sensorelement wenigstens eine Kraftmessdose auf oder ist als Kraftmessdose ausgebildet. Hierdurch kann eine zusätzliche oder alternative Möglichkeit zur Erfassung einer Kraft bzw. Kraftänderung geschaffen werden. Eine Kraftmessdose kann auf der Tragrollenhalterung angebracht oder in die Tragrollenhalterung integriert werden. Es können auch mehrere Kraftmessdosen gemeinsam eingesetzt und einzeln oder miteinander kombiniert in Reihe und bzw. oder parallel zueinander erfasst werden. Dies gilt auch für die Kombination von einem DMS oder mehreren DMS mit einer Kraftmessdose oder mehreren Kraftmessdosen.

Erfindungsgemäß weist die Tragrollenhalterung eine Einschnürung, vorzugsweise in Längsrichtung, auf, wobei das Sensorelement im Bereich der Einschnürung angeordnet ist. Hierdurch kann die Kraftübertragung über die Tragrollenhalterung an der Stelle der Einschnürung kanalisiert und damit erhöht werden, so dass an dieser Stelle durch das Sensorelement ein höherer Messwert erfasst werden kann, was die Qualität der Messung verbessern kann.

Die Einschnürung dabei in Längsrichtung vorzusehen kann vorteilhaft sein, weil die Tragrollenhalterung üblicherweise in der Querrichtung flach ausgebildet ist, um den Platzbedarf der Taschenfördergurtanlage in der Querrichtung möglichst gering zu halten. Hierdurch ergibt sich in der Längsrichtung eine vergleichsweise breite Erstreckung der Tragrollenhalterung in Relation zur Querrichtung, so dass eine Einschnürung in Längsrichtung zu einer wirkungsvollen Kanalisierung auf einen vergleichsweise schmalen Bereich hin führen kann, in dem die Kraftübertragung durch vorzugsweise ein einzelnes Sensorelement besonders aussagekräftig erfasst werden kann.

Gemäß einem weiteren Aspekt der vorliegenden Erfindung ist das Sensorelement drahtgebunden oder drahtlos mit einer Steuerungseinheit signalübertragend verbunden oder kann dies werden. Hierdurch kann in der Steuerungseinheit aus dem Sensorsignal z.B. eines DMS eine Umwandlung in einem Messwert erfolgen. Es kann auch zuvor eine Signalfilterung angewendet werden, welche sowohl in das Sensorelement als auch in die Steuerungseinheit integriert sein kann. Alternativ kann seitens des Sensorelements z.B. als Kraftmessdose bereits ein Messwert vorliegen, welcher der Steuerungseinheit zur Verfügung gestellt werden kann.

In beiden Fällen kann dies über ein Kabel drahtgebunden erfolgen, was kostengünstig und einfach sein kann. Alternativ kann dies auch drahtlos erfolgen, indem das Sensorelement als z.B. RFID-Sensorelement ausgebildet ist bzw. ein RFID-Element aufweist; die Steuerungseinheit ist in diesem Fall ebenfalls ausgebildet, Signal mindestens drahtlos zu empfangen. In beiden Fällen kann eine einseitige Übertragung von Sensorwerten bzw. von Messdaten vom Sensorelement an die Steuerungseinheit erfolgen. Zusätzlich kann ggfs. auch eine Datenübertragung von der Steuerungseinheit zum Sensorelement erfolgen, um dieses z.B. durch Anweisungen zu aktivieren, zu deaktivieren, zu kalibrieren etc.

Gemäß einem weiteren Aspekt der vorliegenden Erfindung ist die Steuerungseinheit ausgebildet, wenigstens eine Fördergeschwindigkeit in der Förderrichtung des Taschenfördergurts in Abhängigkeit der erfassten Kraft und bzw. oder Kraftänderung zu steuern und bzw. oder zu regeln. Hierdurch kann z.B. eine Steuerung bzw. Regelung eines Massenstroms erfolgen, welcher sich aus der Förder- bzw. Umlaufgeschwindigkeit des Taschenfördergurts und dem Abstand der Tragrollenhalterungen im Verlauf der Taschenfördergurtanlage ergibt. Mit anderen Worten kann auf diese Art und Weise eine Steuerung von Massenströmen bzw. von Fördergut-Teilströmen im Förderprozess erfolgen. Diese kann z.B. dadurch umgesetzt werden, dass aufgrund der Nutzung der erfindungsgemäßen Wiegefunktion jeweils direkt vor und hinter dem Abwurf durch eine entsprechende Ansteuerung der "Schüttgutweiche" innerhalb der Abwurfschurre ein seitlicher Abwurf des Fördergutes unter Berücksichtigung der erfassten Kraft bzw.

Kraftänderung gesteuert bzw. geregelt werden kann; dies kann anstelle der bisher üblichen 1/0-Steuerung erfolgen.

Gemäß einem weiteren Aspekt der vorliegenden Erfindung ist das Sensorelement ausgebildet, drahtgebunden oder drahtlos elektrisch versorgt zu werden. Hierdurch kann die elektrische Versorgung des Sensorelements auf unterschiedliche Arten sichergestellt werden.

Gemäß einem weiteren Aspekt der vorliegenden Erfindung ist die Tragrollenhalterung mit dem Sensorelement austauschbar ausgebildet. Mit anderen Worten kann die Tragrollenhalterung samt Sensorelement ausgetauscht werden. Hierdurch kann die erfindungsgemäße Wiegefunktion z.B. bei einer bestehenden Taschenfördergurtanlage nachträglich durch den Austausch wenigstens einer sensorlosen Tragrollenhalterung gegen eine erfindungsgemäße Tragrollenhalterung nachgerüstet werden, so dass diese Funktion nicht bereits zum Zeitpunkt der Anlagenkonstruktion berücksichtigt werden muss.

Gemäß einem weiteren Aspekt der vorliegenden Erfindung ist das Sensorelement ferner ausgebildet, eine Temperatur an der Stelle der Tragrollenhalterung zu erfassen. Hierdurch kann auch diese Information für die Steuerung und bzw. oder Regelung der Taschenfördergurtanlage verwendet werden.

Mit anderen Worten kann gemäß der vorliegenden Erfindung ganz allgemein eine Taschenfördergurtanlage von Anfang an oder durch ein einfaches Nachrüstsystem zum Austausch bereits existierender Tragelemente durch mit entsprechender Sensortechnik optimierte Komponenten ausgestattet werden, um die erfindungsgemäße Wiegefunktion zu nutzen. Durch die Zusammenschaltung von mit Sensorelementen ausgerüsteten Tragrollenhalterung als eine Einheit über eine entsprechende Streckenlänge können sowohl Stillstandzeiten der Anlage als auch der konstruktive Aufwand in der Anlage auf ein Minimum reduziert werden. Auch kann dem Anlagenbetreiber als z.B. Plug-and-Play-System eine Vielzahl von (Zusatz-)Funktionen neben der eigentlichen Massenstromermittlung offeriert werden.

Als (Zusatz-) Funktionen sind beispielsweise zu nennen:
1. Massenstromerfassung
2. Füllstandüberwachung
3. Anpassung der Fördergeschwindigkeit bei häufig wechselnden Beladungszuständen
4. aus den Punkten 2 und 3 resultierende Lebensdauerverlängerung des Gurtsystems auf Grund reduzierter Lastspielzahlen im Betrieb
5. aus den Punkten 2 und 3 resultierende Kosten- und Energieeinsparung des Fördersystems auf Grund einer reduzierten Umlaufgeschwindigkeit im Betrieb
6. Variable Schüttgutregelung durch die zusätzliche Implementierung einer angesteuerten Schüttgutweiche beim seitlichen Abwurf (Schurre mit Weiche)

Über eine zentrale oder aber mehrere lokal positionierte und kabel- oder aber auch funkgestützte Energieversorgungs- und Auswerteeinheiten kann der Informationsfluss zur weiteren Nutzung (einschließlich der (Zusatz-)Funktionen) an den Anwender übermittelt, erfasst, gespeichert und zur entsprechende Anlagen- und Prozess-Steuerung genutzt werden.

Dabei ist die Auswerteeinheit vorzugsweise bereits mit einem in der Industrie üblichen Schnittstellensystem ausgestattet, welches ebenfalls die nachträgliche Implementierung der Messeinrichtung erheblich erleichtert.

Zudem ermöglich die Positionierung der einzelnen Sensoren am Tragarm bzw. an der Tragrollenhalterung (auf dem Arm selbst oder innerhalb des Befestigungselements) sowohl ein einfaches Nachrüsten (durch Austausch) als auch die Einplanung bereits zum Zeitpunkt der Erstauslegung durch Nutzung dieser maßgleichen Tragarmkonstruktion anstatt von Standardtragarmen.

Ein Ausführungsbeispiel und weitere Vorteile der Erfindung werden nachstehend im Zusammenhang mit den folgenden Figuren erläutert. Darin zeigt:
- Fig. 1: eine perspektivische schematische Schnittdarstellung einer erfindungsgemäßen Taschenfördergurtanlage mit einem bekannten Taschenfördergurt; und

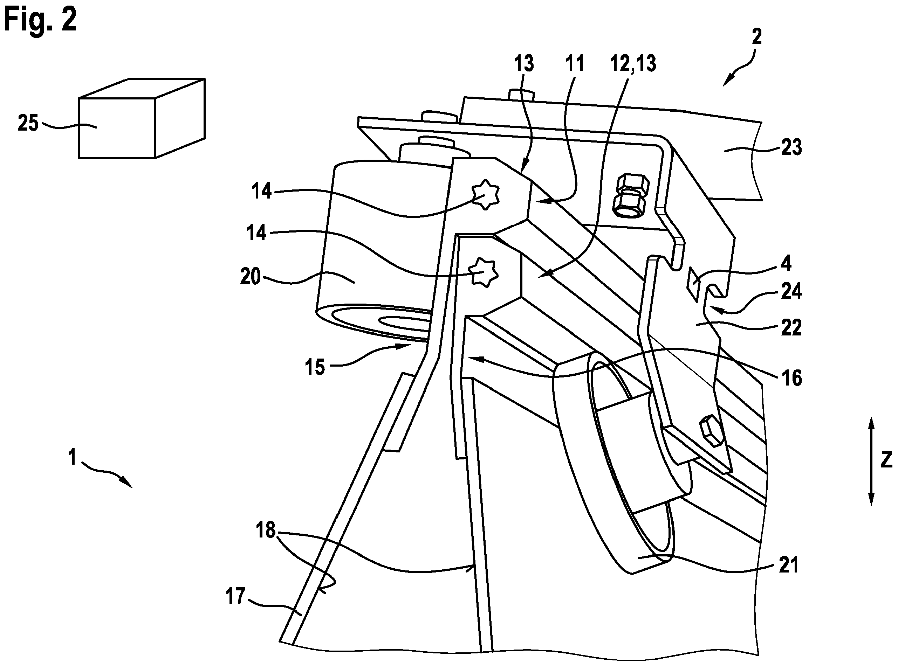

- Fig. 2: eine Detailansicht der Figur 1.

Die Beschreibung der o.g. Figuren erfolgt in kartesischen Koordinaten mit einer Längsrichtung X, einer zur Längsrichtung X senkrecht ausgerichteten Querrichtung Y sowie einer sowohl zur Längsrichtung X als auch zur Querrichtung Y senkrecht ausgerichteten vertikalen Richtung Z. Die Längsrichtung X kann auch als Tiefe X, die Querrichtung Y auch als Breite Y und die vertikale Richtung Z auch als Höhe Z bezeichnet werden.

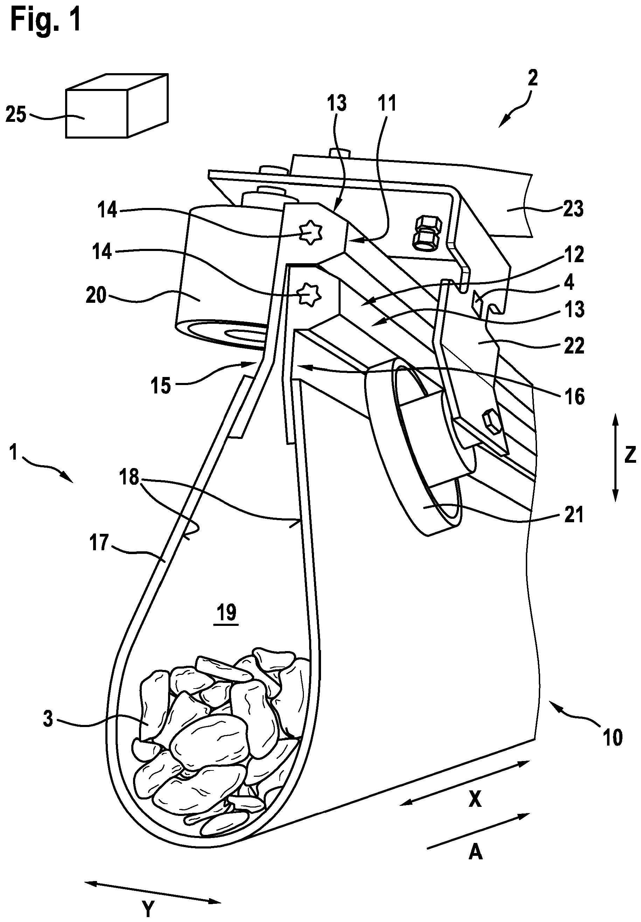

In der Figur 1 wird ein bekannter Taschenfördergurt 1 in einer erfindungsgemäßen Taschenfördergurtanlage 2 betrachtet. Der Taschenfördergurt 1 weist einen Fördergurtkörper 10 auf, welcher auch als Tasche 10 oder Bag 10 bezeichnet werden kann und aus einem Elastomermaterial ausgebildet ist. In der Querrichtung Y außenseitig weist der Fördergurtkörper 10 eine erste Fördergurtkante 11 und ein zweite Fördergurtkante 12 auf, welche im geschlossenen Zustand des Taschenfördergurts 1 übereinander angeordnet sind, so dass die erste Fördergurtkante 11 als obere Fördergurtkante 11 und die zweite Fördergurtkante 12 als untere Fördergurtkante 12 bezeichnet werden kann. Innerhalb der beiden Fördergurtkanten 11, 12 verläuft jeweils ein in der Längsrichtung X geschlossenes Stahlseil 14 als Zugträger 14.

Die beiden Fördergurtkanten 11, 12 gehen nach unten in jeweils einen Kontaktbereich 15, 16 über, der auch als Fahne 15, 16 bezeichnet werden kann. Mit den Kontaktbereichen 15, 16 ist ein Taschenkörper 17 jeweils seitlich verbunden, auf dessen oberer Seite als Tragseite 18 ein Fördergut 3 wie z.B. ein Schüttgut 3 aufgenommen werden kann. Im geschlossenen Zustand umschließt die Tragseite 18 des Taschenkörpers 17 das Fördergut 3 in der Querrichtung Y und in der Höhe Z, so dass die Tragseite 18 dann auch als Innenseite 18 bezeichnet werden kann, welche einen Innenraum 19 des Taschenfördergurts 1 einschließt.

Beide Fördergurtkanten 11, 12 weisen jeweils ein Profil 13 auf, welches dem Halt durch entsprechend angeordnete Rollen 20, 21 der Taschenfördergurtanlage 2 dient, welche jeweils paarweise angeordnet sind. Jedes Paar von Rollen 20, 21 weist eine seitlich angeordnete Spannrolle 20 auf, welche die beiden Fördergurtkanten 11, 12 in der Querrichtung Y aneinander drückt, sowie eine schräg unterhalb der unteren Fördergurtkante 12 angeordnete Tragrolle 21, welche das Gewicht des Taschenfördergurts 1 samt Fördergut 3 im Wesentlichen trägt. Dabei wird der Abstand der beiden Rollen 20, 21 zueinander bzw. zu den Fördergurtkanten 11, 12 derart gewählt, so dass die Bewegung des Taschenfördergurts 1 in der Bewegungsrichtung A entlang der Längsrichtung X ermöglicht wird und gleichzeitig die Fördergurtkanten 11, 12 beim Durchlaufen des Paares von Rollen 20, 21 sicher gehalten und geführt werden können.

Die Spannrolle 20 und die Tragrolle 21 sind über eine Tragrollenhalterung 22 mit dem Traggestell 23, welches oberhalb der Rollen 20, 21 sowie des Taschenfördergurts 1 angeordnet ist, verbunden.

Erfindungsgemäß weist die Tragrollenhalterung 22 ein Sensorelement 4 auf, welches die Kraft bzw. die Kraftänderung erfassen kann, welche von der Tragrolle 21 über die Tragrollenhalterung 22 an das Traggestell 23 weitergeleitet wird. Dabei ist das Sensorelement 4 als Dehnungsmessstreifen 4 ausgebildet, welcher von außen in der Querrichtung Y auf die Tragrollenhalterung 22 dort aufgeklebt ist, wo diese eine Einschnürung 24 in der Längsrichtung X aufweist. Hierdurch kann die Lastübertragung an der Stelle der Einschnürung 24 kanalisiert und besser von dem Dehnungsmesstreifen 4 erfasst werden.

Die Taschenfördergurtanlage 2 weist eine Steuerungseinheit 25 auf, welche über eine signalführende Leitung, d.h. drahtgebunden, mit dem Dehnungsmesstreifen 4 verbunden ist. Hierdurch kann die erfasste Last z.B. zur Regelung des Massestroms der Taschenfördergurtanlage 2 während des Betriebs verwendet werden.

### Bezugszeichenliste (Teil der Beschreibung)

- A: Bewegungsrichtung/Förderrichtung des Taschenfördergurts 1
- X: Längsrichtung; Tiefe
- Y: Querrichtung; Breite
- Z: vertikale Richtung; Höhe

- 1: Taschenfördergurt; SICON-Fördergurt
- 10: Fördergurtkörper; Tasche; Bag
- 11: erste, obere Fördergurtkante
- 12: zweite, untere Fördergurtkante
- 13: Profile der Fördergurtkanten 11, 12
- 14: Zugträger; Stahlseile
- 15: Kontaktbereich/Fahne der ersten, oberen Fördergurtkante 11
- 16: Kontaktbereich/Fahne der zweiten, unteren Fördergurtkante 12
- 17: Taschenkörper
- 18: Tragseite des Taschenfördergurts 1; Innenseite des geschlossenen Taschenfördergurts 1
- 19: Innenraum des geschlossenen Taschenfördergurts 1

- 2: Taschenfördergurtanlage
- 20: Spannrolle
- 21: Tragrolle
- 22: Tragrollenhalterung
- 23: Traggestell
- 24: Einschnürung der Tragrollenhalterung 22
- 25: Steuerungseinheit

- 3: Fördergut; Schüttgut

- 4: Sensorelement

## Patentansprüche

1. Taschenfördergurtanlage (2), mit
einem Taschenfördergurt (1) und mit
einer Mehrzahl von Tragrollen (21), welche ausgebildet sind, eine untere Fördergurtkante (12) des Taschenfördergurts (1) zu tragen,
wobei die Tragrollen (21) jeweils mittels wenigstens einer Tragrollenhalterung (22) kraftaufnehmend mit einem Traggestell (23) der Taschenfördergurtanlage (2) verbunden sind,
**dadurch gekennzeichnet, dass**
wenigstens eine Tragrollenhalterung (22), vorzugsweise eine Mehrzahl von Tragrollenhalterungen (22), wenigstens ein Sensorelement (4) aufweist, welches angeordnet und ausgebildet ist, wenigstens eine Kraft und/oder eine Kraftänderung zwischen der Tragrolle (21) und dem Traggestell (23) zu erfassen,
wobei
die Tragrollenhalterung (22) eine Einschnürung (24), vorzugsweise in Längsrichtung (X), aufweist,
wobei das Sensorelement (4) im Bereich der Einschnürung (24) angeordnet ist.

2. Taschenfördergurtanlage (2) nach Anspruch 1, **dadurch gekennzeichnet, dass** das Sensorelement (4) wenigstens einen Dehnungsmesstreifen aufweist oder als Dehnungsmesstreifen ausgebildet ist.

3. Taschenfördergurtanlage (2) nach Anspruch 1 oder 2, **dadurch gekennzeichnet, dass**
das Sensorelement (4) wenigstens eine Kraftmessdose aufweist oder als Kraftmessdose ausgebildet ist.

4. Taschenfördergurtanlage (2) nach einem der vorherigen Ansprüche, **dadurch gekennzeichnet, dass**
das Sensorelement (4) drahtgebunden oder drahtlos mit einer Steuerungseinheit (25) signalübertragend verbunden ist oder werden kann.

5. Taschenfördergurtanlage (2) nach Anspruch 4, **dadurch gekennzeichnet, dass** die Steuerungseinheit (25) ausgebildet ist, wenigstens eine Fördergeschwindigkeit in der Förderrichtung (A) des Taschenfördergurts (1) in Abhängigkeit der erfassten Kraft und/oder Kraftänderung zu steuern und/oder zu regeln.

6. Taschenfördergurtanlage (2) nach einem der vorherigen Ansprüche, **dadurch gekennzeichnet, dass**
das Sensorelement (4) ausgebildet ist, drahtgebunden oder drahtlos elektrisch versorgt zu werden.

7. Taschenfördergurtanlage (2) nach einem der vorherigen Ansprüche, **dadurch gekennzeichnet, dass**
die Tragrollenhalterung (22) mit dem Sensorelement (4) austauschbar ausgebildet ist.

8. Taschenfördergurtanlage (2) nach einem der vorherigen Ansprüche, **dadurch gekennzeichnet, dass**
das Sensorelement (4) ferner ausgebildet, eine Temperatur an der Stelle der Tragrollenhalterung (22) zu erfassen.

## Claims

1. Pocket-type conveyor belt installation (2) having
a pocket-type conveyor belt (1) and having
a plurality of carrying rollers (21), which are designed to support a lower conveyor belt edge (12) of a pocket-type conveyor belt (1),
wherein the carrying rollers (21) are each connected in load-bearing fashion by means of at least one carrying roller holder (22) to a carrying frame (23) of the pocket-type conveyor belt installation (2),
**characterized in that**
at least one carrying roller holder (22), preferably a plurality of carrying roller holders (22), has at least one sensor element (4), which is arranged and designed to record at least a force and/or a change in force between the carrying roller (21) and the carrying frame (23),
wherein
the carrying roller holder (22) has a neck (24), preferably in the longitudinal direction (X),
wherein the sensor element (4) is arranged in the region of the neck (24).

2. Pocket-type conveyor belt installation (2) according to Claim 1, **characterized in that**
the sensor element (4) has at least one strain gauge or is designed as a strain gauge.

3. Pocket-type conveyor belt installation (2) according to Claim 1 or 2, **characterized in that**
the sensor element (4) has at least one load cell or is designed as a load cell.

4. Pocket-type conveyor belt installation (2) according to any of the preceding claims, **characterized in that**
the sensor element (4) is connected or can be connected in a wired or wireless manner to a control unit (25) in order to transmit signals.

5. Pocket-type conveyor belt installation (2) according to Claim 4, **characterized in that**
the control unit (25) is designed to exercise open-loop and/or closed-loop control at least over a conveying speed in the conveying direction (A) of the pocket-type conveyor belt (1) in accordance with the recorded force and/or change in force.

6. Pocket-type conveyor belt installation (2) according to any of the preceding claims, **characterized in that**
the sensor element (4) is designed to be electrically supplied in a wired or wireless manner.

7. Pocket-type conveyor belt installation (2) according to any of the preceding claims, **characterized in that**
the carrying roller holder (22) is designed to be replaceable with the sensor element (4).

8. Pocket-type conveyor belt installation (2) according to any of the preceding claims, **characterized in that**
the sensor element (4) is furthermore designed to record a temperature at the location of the carrying roller holder (22).

## Revendications

1. Système de bande transporteuse à poches (2), comprenant une bande transporteuse à poches (1) et
une pluralité de rouleaux porteurs (21) qui sont conçus pour supporter un bord inférieur (12) de la bande transporteuse à poches (1),
les rouleaux porteurs (21) étant chacun reliés à un cadre porteur (23) du système de bande transporteuse à poches (2), avec absorption de force, au moyen d'au moins un support de rouleau porteur (22),
**caractérisé en ce que**
au moins un support de rouleau porteur (22), de préférence plusieurs supports de rouleau porteur (22), présente(nt) au moins un élément de détection (4) qui est disposé et conçu pour détecter au moins une force et/ou une variation de force entre le rouleau porteur (21) et le cadre porteur (23),
le support de rouleau porteur (22) présentant un rétrécissement (24), de préférence dans la direction longitudinale (X),
l'élément de détection (4) étant disposé dans la zone du rétrécissement (24).

2. Système de bande transporteuse à poches (2) selon la revendication 1, **caractérisé en ce que**
l'élément de détection (4) comporte au moins une jauge de contrainte ou est réalisé sous la forme d'une jauge de contrainte.

3. Système de bande transporteuse à poches (2) selon la revendication 1 ou 2, **caractérisé en ce que**
l'élément de détection (4) comporte au moins une boîte dynamométrique ou est conçu comme une boîte dynamométrique.

4. Système de bande transporteuse à poches (2) selon l'une des revendications précédentes, **caractérisé en ce que**
l'élément de détection (4) est ou peut être relié en transmission de signal à une unité de commande (25) de manière filaire ou sans fil.

5. Système de bande transporteuse à poches (2) selon la revendication 4, **caractérisé en ce que**
l'unité de commande (25) est conçue pour commander et/ou réguler au moins une vitesse de transport dans la direction de transport (A) de la bande transporteuse à poches (1) en fonction de la force et/ou variation de la force détectées.

6. Système de bande transporteuse à poches (2) selon l'une des revendications précédentes, **caractérisé en ce que**
l'élément de détection (4) est conçu pour être alimenté électriquement de manière filaire ou sans fil.

7. Système de bande transporteuse à poches (2) selon l'une des revendications précédentes, **caractérisé en ce que**
le support de rouleau porteur (22) pourvu de l'élément capteur (4) est conçu pour être remplaçable.

8. Système de bande transporteuse à poches (2) selon l'une des revendications précédentes, **caractérisé en ce que**
l'élément de détection (4) est en outre conçu pour détecter une température à l'emplacement du support de rouleau porteur (22).
